# EUROPEAN PATENT APPLICATION

(11) **EP 4 343 663 A1**
(43) Date of publication of application: **27.03.2024**
(21) Application number: 21940822.6
(22) Date of filing: 20.05.2021
(51) Int. Cl.: G06Q 30/0601

(54) **PURCHASING ASSISTANCE DEVICE, PURCHASING ASSISTANCE METHOD, AND PROGRAM**

(71) Applicant: MITSUBISHI ELECTRIC CORPORATION, Chiyoda-ku Tokyo 100-8310 (JP)
(72) Inventor: TASHIRO, Yusuke, Tokyo 100-8310 (JP); SAITO, Keisuke, Tokyo 100-8310 (JP)
(74) Representative: Pfenning, Meinig & Partner mbB
(86) International application number: PCT/JP2021/019230
(87) International publication number: WO 2022/244208

(57) **Abstract**

A purchase assistance device (10) includes an input information acquirer (102) to acquire requirement information that indicates a requirement desired for a refrigerator by a user planning to purchase the refrigerator, a refrigerator information acquirer (103) to acquire first refrigerator information about a first refrigerator currently used by the user and second refrigerator information about a second refrigerator that satisfies the requirement indicated by the requirement information, and a comparison screen generator (104) to generate, based on the first refrigerator information and the second refrigerator information, a screen for visual comparison between the first refrigerator and the second refrigerator.

## Description

### Technical Field

The present disclosure relates to a purchase assistance device, a purchase assistance method, and a program.

### Background Art

Some techniques have been known to assist the sale of refrigerators in view of needs of users. For example, the home appliance order system disclosed in Patent Literature 1 allows a user to input requirements desired for the refrigerator, such as capacity, shape, color, and functions, on a product catalog site and thereby enables the user to readily purchase the refrigerator that satisfies the user's requirements.

### Citation List

### Patent Literature

Patent Literature 1: Unexamined Japanese Patent Application Publication No. 2003-242389

### Summary of Invention

### Technical Problem

Unfortunately, the system disclosed in Patent Literature 1 does not enable the user to precisely compare the currently used refrigerator and the refrigerator to be purchased, and may cause an inconvenience after purchase of the refrigerator to be purchased. Examples of the inconvenience include a trouble that the purchased refrigerator is larger than the currently used refrigerator and cannot be readily installed, a trouble that the purchased refrigerator has a smaller number of door pockets than the currently used refrigerator, and a trouble that the purchased refrigerator has a freezing compartment at the bottom and is less familiar to the user than the currently used refrigerator having a vegetable compartment at the bottom.

An objective of the present disclosure, which has been accomplished in view of the above situations, is to provide a purchase assistance device and the like that enable a user planning to purchase a refrigerator to precisely compare the refrigerator that satisfies the user's requirements and the refrigerator currently used by the user.

### Solution to Problem

In order to achieve the above objective, a purchase assistance device according to an aspect of the present disclosure includes: requirement information acquisition means for acquiring requirement information that indicates a requirement desired for a refrigerator by a user planning to purchase the refrigerator; refrigerator information acquisition means for acquiring first refrigerator information about a first refrigerator currently used by the user and second refrigerator information about a second refrigerator that satisfies the requirement indicated by the requirement information; and screen generation means for generating, based on the first refrigerator information and the second refrigerator information, a screen for visual comparison between the first refrigerator and the second refrigerator.

### Advantageous Effects of Invention

The purchase assistance device according to an aspect of the present disclosure enables the user planning to purchase a refrigerator to precisely compare the refrigerator that satisfies the user's requirements and the refrigerator currently used by the user.

### Brief Description of Drawings

FIG. 1 illustrates a configuration of a purchase assistance system according to Embodiment 1 of the present disclosure;
FIG. 2 illustrates an exemplary transition of questions displayed on a terminal according to Embodiment 1 of the present disclosure;
FIG. 3 illustrates an exemplary comparison screen displayed on the terminal according to Embodiment 1 of the present disclosure;
FIG. 4 illustrates an exemplary question database according to Embodiment 1 of the present disclosure;
FIG. 5 illustrates an exemplary refrigerator database according to Embodiment 1 of the present disclosure;
FIG. 6 illustrates an exemplary hardware configuration of a purchase assistance device according to Embodiment 1 of the present disclosure;
FIG. 7 is a flowchart illustrating an exemplary process for displaying a comparison screen in the purchase assistance device according to Embodiment 1 of the present disclosure;
FIG. 8 illustrates a configuration of a purchase assistance system according to Embodiment 2 of the present disclosure;
FIG. 9 illustrates an exemplary image of the indoor space, where the refrigerator currently used by the user is installed, captured with a terminal according to Embodiment 2 of the present disclosure;
FIG. 10 illustrates an exemplary augmented reality image generated by superimposing an image of the refrigerator that satisfies requirements on the captured image illustrated in FIG. 9, in a purchase assistance device according to Embodiment 2 of the present disclosure; and
FIG. 11 illustrates an exemplary comparison screen displayed on a terminal according to a modification of the present disclosure.

### Description of Embodiments

The following description is directed to embodiments in which a purchase assistance device according to the present disclosure is applied to a purchase assistance system, with reference to the accompanying drawings. In the drawings, the components identical or corresponding to each other are provided with the same reference symbol.

### Embodiment 1

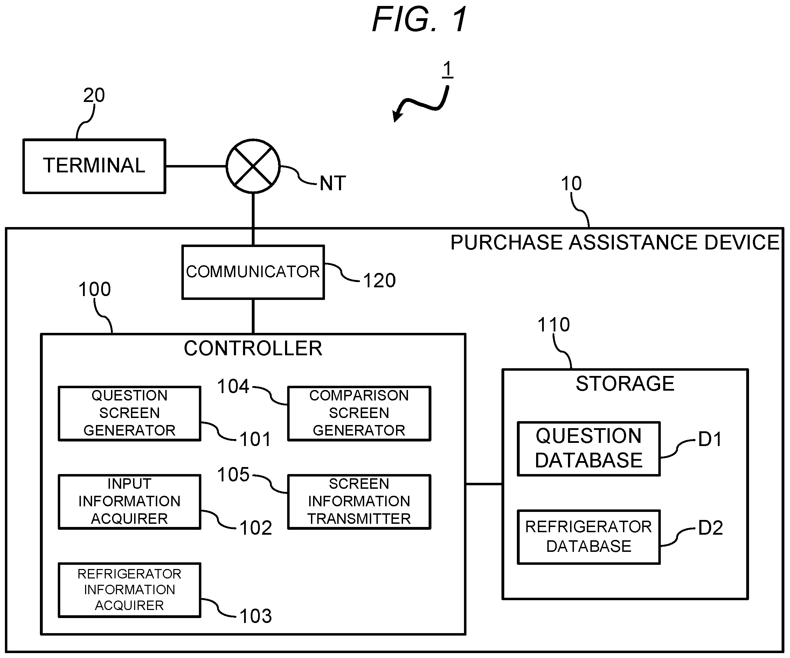

A purchase assistance system 1 according to Embodiment 1 is described below with reference to FIG. 1. The purchase assistance system 1 includes a purchase assistance device 10 and a terminal 20. The purchase assistance device 10 communicates with the terminal 20 via a network NT. A typical example of the network NT is the Internet. The purchase assistance system 1 helps a user to purchase a refrigerator, as is described below.

The purchase assistance device 10 enables the user to visually compare the refrigerator that satisfies the user's requirements and the refrigerator currently used by the user, and thereby helps the user to purchase a refrigerator. A typical example of the purchase assistance device 10 is a webserver operated by the manufacturer of refrigerators to sell the refrigerators directly to users. A user planning to purchase a refrigerator manipulates a terminal 20, which is described below, to access a website run by the purchase assistance device 10 and answers questions displayed on the terminal 20, and is thereby able to visually compare the refrigerator that satisfies the user's requirements and the refrigerator currently used by the user, as is described in detail below. The purchase assistance device 10 has a functional configuration described below. The purchase assistance device 10 is an example of a purchase assistance device according to the present disclosure.

The terminal 20 is manipulated by the user planning to purchase a refrigerator. Examples of the terminal 20 include a smartphone and a tablet privately owned by the user. For example, the terminal 20 has a pre-installed web browser, and the user can access the website run by the purchase assistance device 10 through some operations on the web browser of the terminal 20. The user answers questions displayed on the web browser of the terminal 20, and is thereby able to visually compare the refrigerator that satisfies the user's requirements and the refrigerator currently used by the user, as is described below. A process of accessing the website run by the purchase assistance device 10 through some operations on the web browser of the terminal 20 is hereinafter simply expressed as "accessing the purchase assistance device 10 with the terminal 20".

The following description is directed to questions to the user and a comparison screen to be displayed. When the user accesses the purchase assistance device 10 with the terminal 20, the terminal 20 displays the first question. After the user answers the first question, the terminal 20 displays the second question. After the user answers several questions, the terminal 20 displays a screen for visual comparison between the refrigerator that satisfies the user's requirements and the refrigerator currently used by the user.

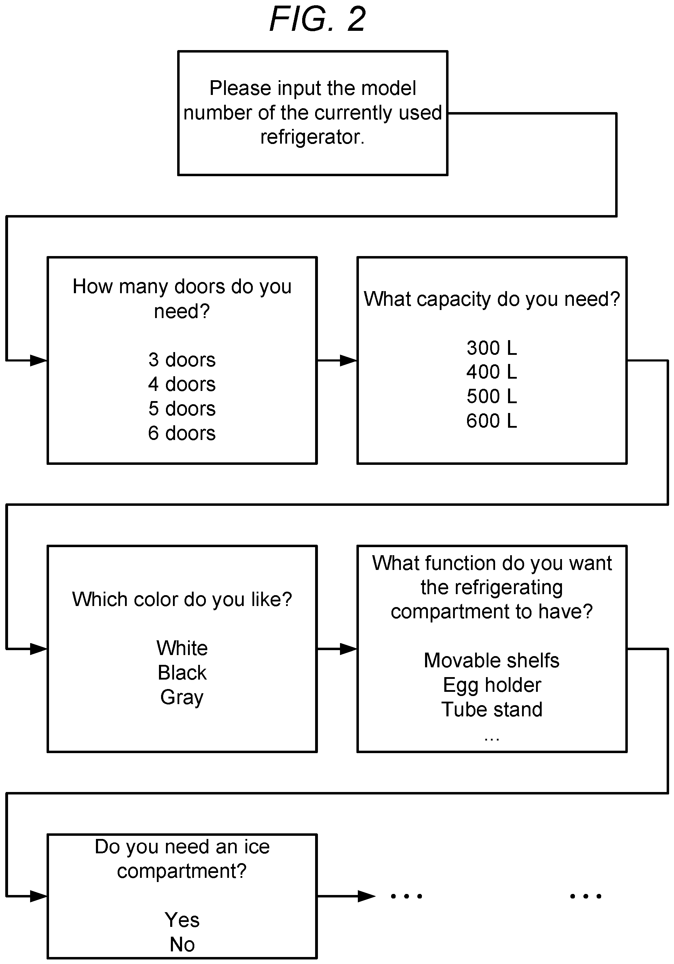

The questions displayed on the terminal 20 are changed, for example, as illustrated in FIG. 2. The first question displayed on the terminal 20 is a question about the model number of the refrigerator currently used by the user. After the user answers the first question, the terminal 20 displays the second question, which is a question about the number of doors that the user desires the refrigerator to include. After the user answers the second question, the terminal 20 displays the third question, which is a question about the capacity that the user desires the refrigerator to have. In response to repetition of questions and answers to and from the user, the terminal 20 displays questions in sequence.

The user is allowed to quit answering to the questions in the middle because the user may find it hard to answer all the questions.

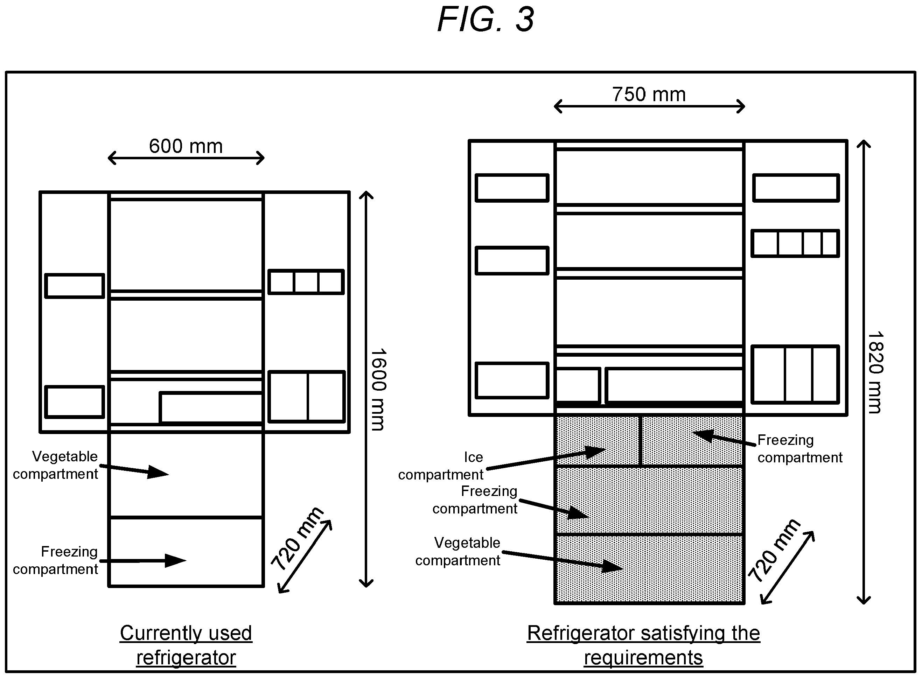

After the user answers the last question or quits answering the questions in the middle, the terminal 20 displays a screen, as illustrated in FIG. 3 as an example, containing a detailed image of the refrigerator currently used by the user and a detailed image of the refrigerator that satisfies the user's requirements. The screen illustrated in FIG. 3 enables the user to visually compare the refrigerator that satisfies the user's requirements and the refrigerator currently used by the user. The user can therefore precisely compare the refrigerator that satisfies the user's requirements and the refrigerator currently used by the user.

A functional configuration of the purchase assistance device 10 is described below with reference to FIG. 1. The purchase assistance device 10 includes a controller 100, a storage 110, and a communicator 120.

The communicator 120 communicates with the terminal 20 via the network NT.

The storage 110 stores a question database D1 and a refrigerator database D2. The question database D1 and the refrigerator database D2 are described in detail below.

The controller 100 is responsible for integrated control of the purchase assistance device 10. The controller 100 includes a question screen generator 101, an input information acquirer 102, a refrigerator information acquirer 103, a comparison screen generator 104, and a screen information transmitter 105.

The question screen generator 101 generates question screens for providing questions about refrigerators to the user. More specifically, the question screen generator 101 generates question screens, referring to the question database D1 stored in the storage 110. The question screen generator 101 generates multiple question screens in sequence. The pieces of information indicating the question screens generated at the question screen generator 101 are transmitted to the terminal 20 by the screen information transmitter 105, which is described below. Accordingly, the terminal 20 receiving these pieces of information displays the questions illustrated in FIG. 2 in sequence. The question screen generator 101 is an example of screen generation means according to the present disclosure.

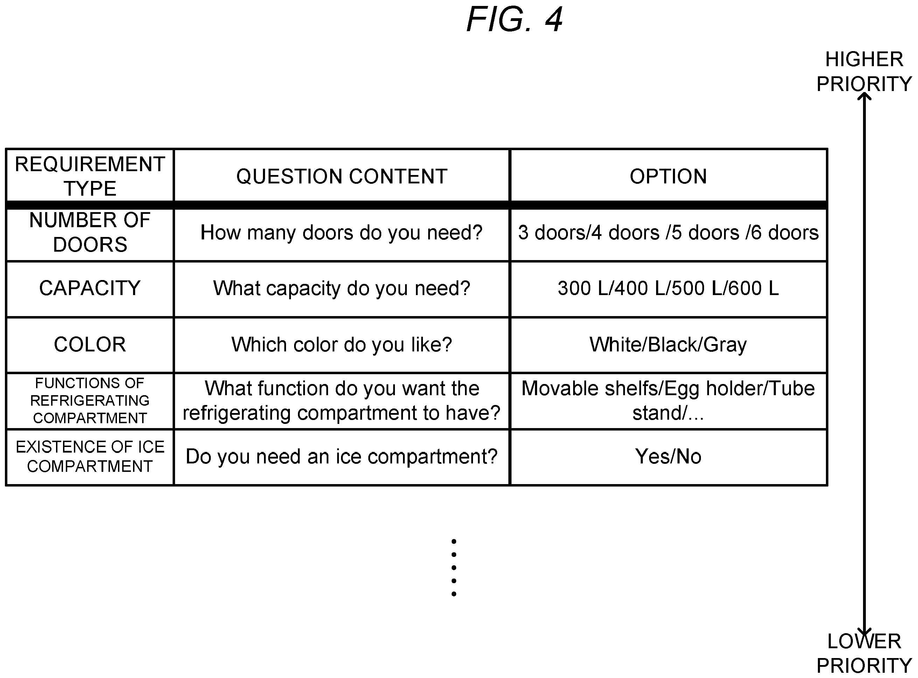

An example of the question database D1 is described below with reference to FIG. 4. Each of the records listed in FIG. 4 is data related to a single question. The data related to a question contains data on a requirement type, data on a question content, and data on options. The questions are provided with priorities, and question screens are generated in descending order of priority. That is, the priorities set to the individual questions determine the order of generation of the question screens. The question database D1 does not contain data for asking about the refrigerator currently used by the user. The question about the refrigerator currently used by the user is generated independently from the question database D1. The question database D1 is preliminarily generated by the administrator of the purchase assistance device 10, for example.

The question screen generator 101 first generates a question screen about the refrigerator currently used by the user, and then refers to the question database D1 illustrated in FIG. 4 and generates question screens in accordance with the order illustrated in FIG. 2 on the basis of the priorities.

The priorities set to the individual pieces of data in the question database D1, that is, the order of generation of question screens is dedicated to refrigerators. The order dedicated to refrigerators means the order that can achieve smooth specification of the refrigerator that satisfies the user's requirements. For example, the user is first asked about the number of doors and the capacity, so that the candidates of the refrigerator that satisfies the requirements can be sufficiently narrowed down even if the user quits answering the questions in the middle. In contrast, if the user were first asked about the functions of a refrigerating compartment, the existence of an ice compartment, and the like, and then quitted answering the questions in the middle, the candidates would still include refrigerators having various numbers of doors and various capacities. In this case, it would be difficult to smoothly specify the refrigerator that exactly satisfies the user's requirements.

In other words, questions of large categories, such as questions about the number of doors and the capacity, contributing to smooth specification of the refrigerator, are associated with higher priorities. In contrast, questions of small categories, such as questions about the functions of a refrigerating compartment and the existence of an ice compartment, less contributing to smooth specification of the refrigerator than the questions of large categories, are associated with lower priorities. This configuration can improve the convenience of the user.

Referring back to FIG. 1, the input information acquirer 102 acquires pieces of input information, indicating the answers input from the user on the question screens displayed on the terminal 20, from the terminal 20 via the communicator 120. Some of the acquired pieces of input information indicating the answers to the questions other than the question about the refrigerator currently used by the user also serve as information (hereinafter referred to as "requirement information") indicating the user's requirements for the refrigerator. That is, the pieces of input information include pieces of requirement information and a piece of information about the refrigerator currently used by the user. The input information acquirer 102 is an example of requirement information acquisition means according to the present disclosure.

The refrigerator information acquirer 103 refers to the refrigerator database D2 stored in the storage 110, and acquires first refrigerator information about the refrigerator currently used by the user and second refrigerator information about the refrigerator that satisfies the requirements indicated by the requirement information, on the basis of the pieces of input information. The refrigerator information acquirer 103 is an example of refrigerator information acquisition means according to the present disclosure.

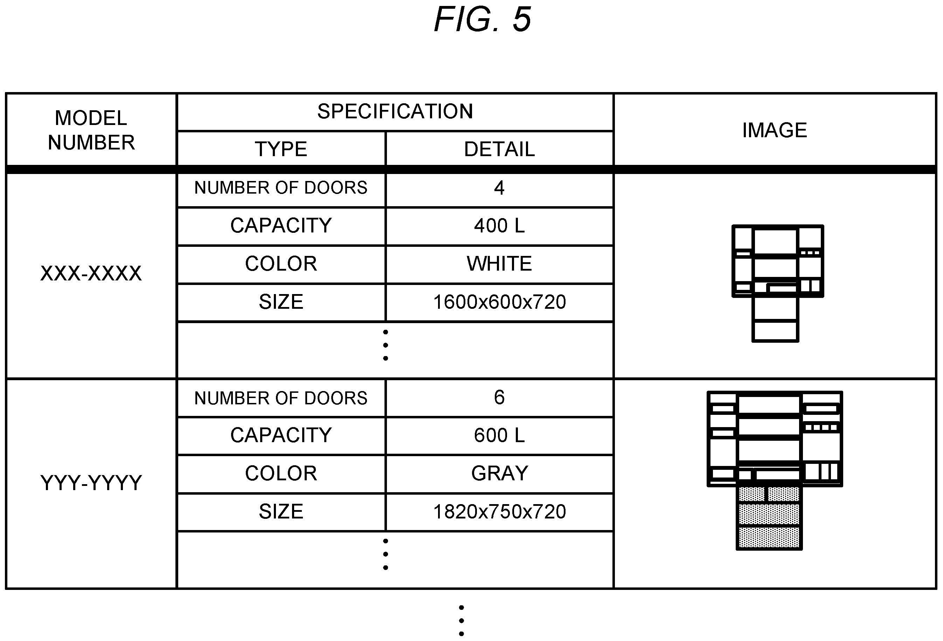

The refrigerator database D2 is described below with reference to FIG. 5. Each of the records listed in FIG. 5 corresponds to pieces of data related to a single refrigerator. The data related to a refrigerator contains data on the model number, specification data, and image data. The image data is used when the comparison screen illustrated in FIG. 3 is displayed. The refrigerator database D2 is generated by shaping electronic data obtained from a product catalog site operated by the manufacturer of refrigerators, for example. Alternatively, the refrigerator database D2 may be manually generated by the administrator of the purchase assistance device 10. The refrigerator information acquirer 103 acquires the first refrigerator information and the second refrigerator information, on the basis of the pieces of data in each column of the refrigerator database D2 and the pieces of input information.

In an exemplary case where the user inputs the answer "model number XXX-XXXX" to the question about the refrigerator currently used by the user, the refrigerator information acquirer 103 acquires the pieces of data in the record associated with the "model number XXX-XXXX", as the first refrigerator information. In another exemplary case where the user inputs the answer "six doors" to the question about the number of doors and inputs the answer "600 L" to the question about the capacity, the refrigerator information acquirer 103 acquires the pieces of data in the record associated with the "model number YYY-YYYY" , about the refrigerator of which the "number of doors" is "6" and the "capacity" is "600 L", as the second refrigerator information.

Referring back to FIG. 1, the comparison screen generator 104 generates a screen for visual comparison between the refrigerator currently used by the user and the refrigerator that satisfies the user's requirements, for example, as illustrated in FIG. 3, on the basis of the first refrigerator information and the second refrigerator information. Since the refrigerator database D2 contains specification data and image data on refrigerators as described above, the first refrigerator information and the second refrigerator information also contains specification data and image data. The comparison screen generator 104 can thus generate the comparison screen like that illustrated in FIG. 3. The comparison screen generator 104 is an example of screen generation means according to the present disclosure.

The screen information transmitter 105 transmits pieces of screen information indicating question screens generated at the question screen generator 101 and a piece of screen information indicating a comparison screen generated at the comparison screen generator 104, to the terminal 20 via the communicator 120. Because of the transmission of the pieces of screen information from the screen information transmitter 105 to the terminal 20, the terminal 20 can display the question screens and the comparison screen.

For example, the screen information transmitter 105 transmits pieces of screen information, containing various files that constitute web pages for sequentially presenting the question screens generated at the question screen generator 101, to the terminal 20. The various files that constitute the web pages contain hypertext markup language (HTML) files, script files, style sheet files, and image files, for example. The screen information transmitter 105 also transmits a piece of screen information, containing various files that constitute a web page for presenting the comparison screen generated at the comparison screen generator 104, to the terminal 20, for example. The terminal 20 receiving the pieces of screen information loads the various files contained in the pieces of screen information into the web browser, and can thus display the screens indicated by the pieces of screen information.

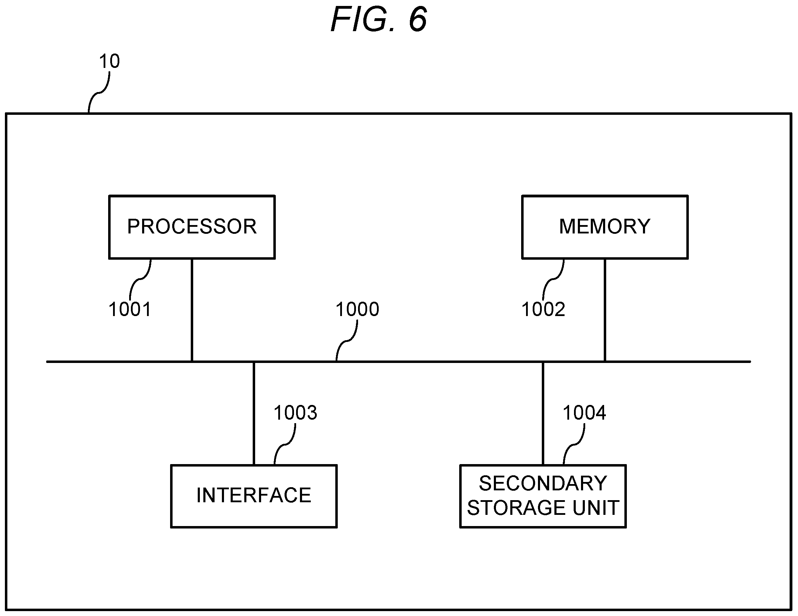

An exemplary hardware configuration of the purchase assistance device 10 is described below with reference to FIG. 6. The purchase assistance device 10 illustrated in FIG. 6 is achieved by a computer, such as server computer or personal computer, for example.

The purchase assistance device 10 includes a processor 1001, a memory 1002, an interface 1003, and a secondary storage unit 1004, which are connected to each other via buses 1000.

The processor 1001 is a central processing unit (CPU), for example. The processor 1001 loads an operational program stored in the secondary storage unit 1004 into the memory 1002 and executes the operational program, and thereby achieves the individual functions of the purchase assistance device 10.

The memory 1002 is a primary storage unit including a random access memory (RAM), for example. The memory 1002 stores the operational program loaded by the processor 1001 from the secondary storage unit 1004. The memory 1002 also serves as a working memory during execution of the operational program at the processor 1001.

The interface 1003 is an input/output (I/O) interface, such as serial port, universal serial bus (USB) port, or network interface, for example. The interface 1003 can achieve the functions of the communicator 120.

The secondary storage unit 1004 is a flash memory, a hard disk drive (HDD), or a solid state drive (SSD), for example. The secondary storage unit 1004 stores the operational program to be executed by the processor 1001. The secondary storage unit 1004 can achieve the functions of the storage 110.

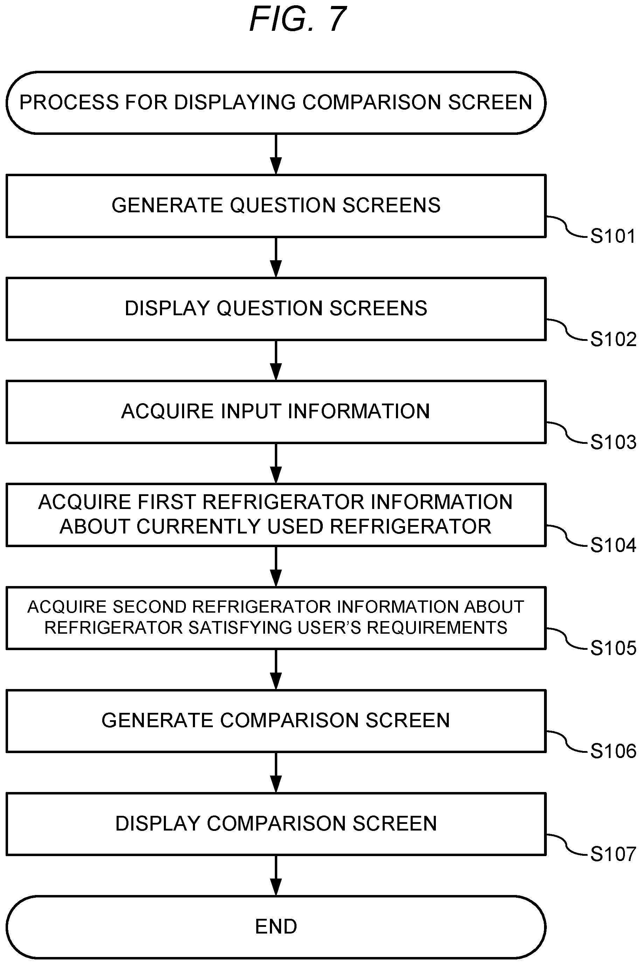

The description is then directed to an exemplary process for displaying a comparison screen in the purchase assistance device 10, with reference to FIG. 7. The process illustrated in FIG. 7 is executed when the user accesses the purchase assistance device 10 with the terminal 20, for example.

The question screen generator 101 of the controller 100 of the purchase assistance device 10 refers to the question database D1 stored in the storage 110 and generates question screens (Step S101).

The screen information transmitter 105 of the controller 100 transmits pieces of image information indicating the question screens generated in Step S101 to the terminal 20, and thereby causes the terminal 20 to display the question screens generated in Step S101 (Step S102).

The input information acquirer 102 of the controller 100 acquires pieces of input information, indicating answers input from the user on the question screens displayed on the terminal 20, from the terminal 20 (Step S103).

The refrigerator information acquirer 103 of the controller 100 refers to the refrigerator database D2 stored in the storage 110, and acquires first refrigerator information about the refrigerator currently used by the user, on the basis of the pieces of input information acquired in Step S 103 (Step S104).

The refrigerator information acquirer 103 refers to the refrigerator database D2 stored in the storage 110, and acquires second refrigerator information about the refrigerator that satisfies the user's requirements for the refrigerator, on the basis of the requirement information contained in the pieces of input information acquired in Step S103 (Step S105).

The comparison screen generator 104 of the controller 100 generates a comparison screen for visual comparison between the refrigerator currently used by the user and the refrigerator that satisfies the user's requirements, on the basis of the first refrigerator information acquired in Step S104 and the second refrigerator information acquired in Step S 105 (Step S106).

The screen information transmitter 105 transmits image information indicating the comparison screen generated in Step S106 to the terminal 20, and thereby causes the terminal 20 to display the comparison screen generated in Step S106 (Step S107). The controller 100 then terminates the process for displaying a comparison screen.

The above description is directed to the purchase assistance device 10 and the purchase assistance system 1 according to Embodiment 1. The purchase assistance device 10 generates a comparison screen for visual comparison between the refrigerator currently used by the user and the refrigerator that satisfies the user's requirements, and therefore enables the user planning to purchase a refrigerator to precisely compare the refrigerator that satisfies the user's requirements and the refrigerator currently used by the user.

In addition, the purchase assistance device 10 first causes question screens concerning questions of large categories to be displayed on the terminal 20 and then causes question screens concerning questions of small categories to be displayed on the terminal 20. The purchase assistance device 10 can thus sufficiently narrow down the candidates of the refrigerator that satisfies the requirements even if the user quits answering the questions in the middle, and therefore improve the convenience of the user.

### Embodiment 2

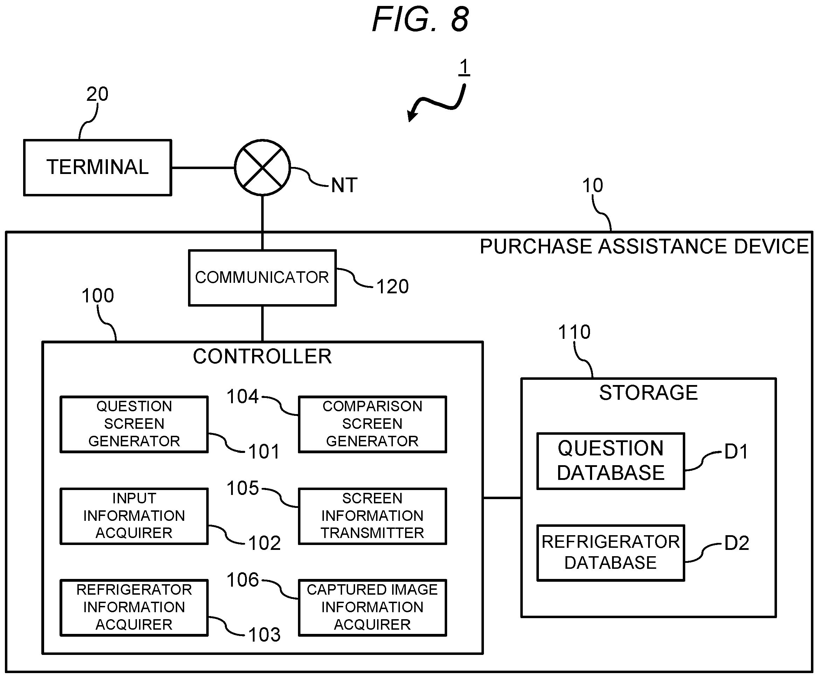

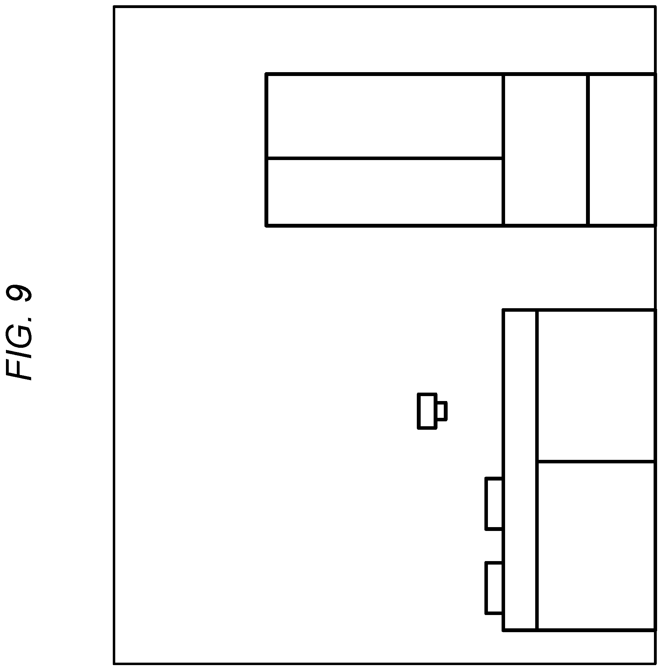

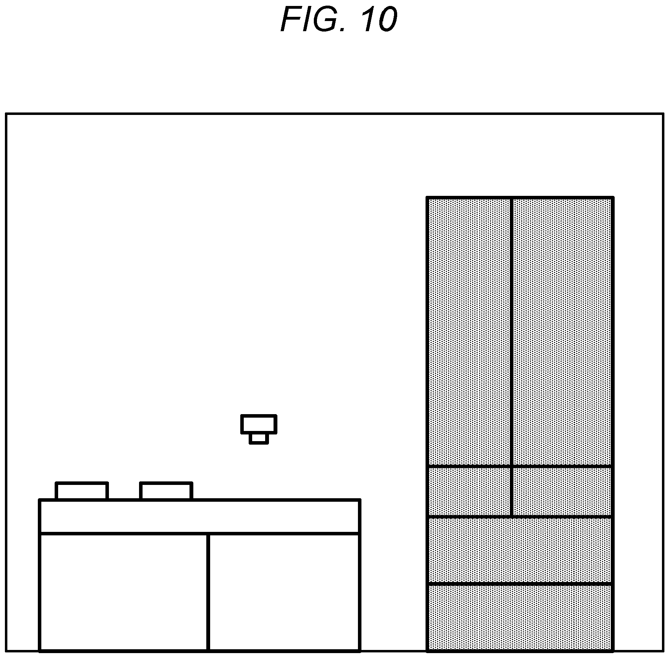

The purchase assistance system 1 according to Embodiment 2 is described below with reference to FIG. 8. The purchase assistance system 1 according to Embodiment 2 utilizes augmented reality (AR) and can achieve more precise comparison between the refrigerator that satisfies the user's requirements and the refrigerator currently used by the user. Specifically, the user captures an image of the indoor space where the refrigerator currently used by the user is installed, for example, as illustrated in FIG. 9, with an imaging unit included in the terminal 20. The purchase assistance device 10 acquires image information indicating the captured image of the indoor space from the terminal 20, generates an augmented reality image by superimposing an image of the refrigerator that satisfies the requirements on the captured image, for example, as illustrated in FIG. 10, and causes the terminal 20 to display the augmented reality image. The augmented reality image allows the user to have an experience as if the refrigerator that satisfies the requirements is actually installed in the indoor space, and thus more precisely compare the currently used refrigerator and the refrigerator that satisfies the requirements. For example, the user can consider the possibility of installation, the color, and the like, of the refrigerator that satisfies the requirements, on the basis of the augmented reality image.

Although the purchase assistance system 1 according to Embodiment 2 is generally the same as that in Embodiment 1, the purchase assistance device 10 according to Embodiment 2 differs from that according to Embodiment 1 in that the controller 100 further includes a captured image information acquirer 106, as illustrated in FIG. 8. Embodiment 2 also differs from Embodiment 1 in that the comparison screen generator 104 generates a comparison screen for presenting the above-mentioned augmented reality image.

The captured image information acquirer 106 acquires, from the terminal 20 via the communicator 120, image information indicating an image of the indoor space provided with the refrigerator currently used by the user, which is captured with the terminal 20. The captured image information acquirer 106 is an example of image information acquisition means according to the present disclosure.

In Embodiment 2, the comparison screen generator 104 first specifies an area of the captured image that corresponds to the image of the refrigerator currently used by the user. For example, the comparison screen generator 104 recognizes the image of the refrigerator contained in the captured image on the basis of the image data contained in the first refrigerator information. The comparison screen generator 104 then generates an augmented reality image by superimposing the image of the refrigerator that satisfies the requirements on the captured image, on the basis of the size data contained in the first refrigerator information and the size data contained in the second refrigerator information. Because the size data contained in the first refrigerator information can determine the scale of the refrigerator in the captured image, the comparison screen generator 104 can superimpose the image of the refrigerator that satisfies the requirements on the captured image, on the basis of this scale and the size data contained in the second refrigerator information. The comparison screen generator 104 then generates a screen for presenting this augmented reality image.

The above description is directed to the purchase assistance system 1 and the purchase assistance device 10 according to Embodiment 2. The purchase assistance device 10 according to Embodiment 2 allows the user to view an augmented reality image generated by superimposing an image of the refrigerator that satisfies the requirements on a captured image of the indoor space provided with the refrigerator currently used by the user, and thereby enables the user to more precisely compare the currently used refrigerator and the refrigerator that satisfies the requirements.

### Modification

Although the purchase assistance device 10 is separate from the terminal 20 in Embodiments 1 and 2, the purchase assistance device 10 may also be integrated with the terminal 20. The following description assumes an electronic catalog application executable in the terminal 20, for example. This electronic catalog application when executed in the terminal 20 causes the terminal 20 to function as the purchase assistance device 10. In this case, the user can precisely compare the currently used refrigerator and the refrigerator that satisfies the user's requirements through execution of the electronic catalog application in the terminal 20, without accessing the network NT. Especially in Embodiment 2, the electronic catalog application can eliminate the need for transmission of a captured image to the network NT, thereby reducing the data traffic.

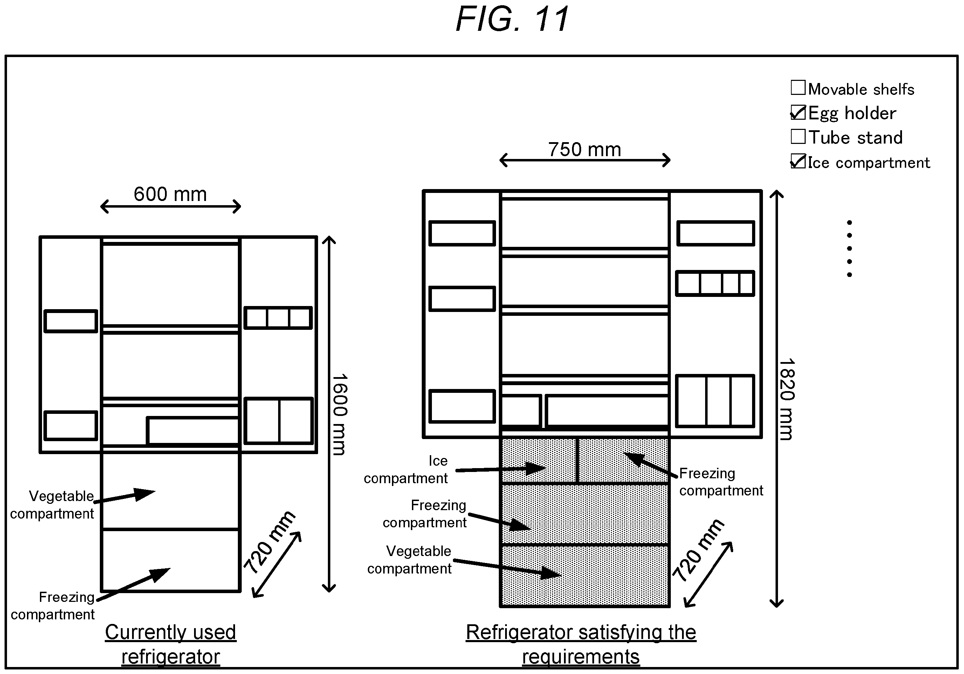

In Embodiments 1 and 2, both of questions of large categories and questions of small categories are displayed in advance of display of a comparison screen. Alternatively, the questions of large categories alone may be presented in the question screens, while the questions of small categories may be contained in the comparison screen, as illustrated in FIG. 11. In this case, the user can set the user's requirements for the refrigerator about small categories by checking or unchecking the checkboxes contained in the comparison screen. In response to every operation of the user of checking or unchecking the checkboxes, the input information is transmitted from the terminal 20 to the input information acquirer 102, and the comparison screen generator 104 regenerates a comparison screen.

Although the purchase assistance device 10 includes the secondary storage unit 1004 in the hardware configuration illustrated in FIG. 6, this configuration is a mere example. The secondary storage unit 1004 may be provided outside the purchase assistance device 10, and the purchase assistance device 10 may be connected to the secondary storage unit 1004 via the interface 1003. In this modification, a removable medium, such as USB flash drive or memory card, may also serve as the secondary storage unit 1004.

Instead of the hardware configuration illustrated in FIG. 6, the purchase assistance device 10 may be configured by a dedicated circuit including an application specific integrated circuit (ASIC) or a field programmable gate array (FPGA), for example. Alternatively, the functions of the purchase assistance device 10 in the hardware configuration illustrated in FIG. 6 may be partially performed by a dedicated circuit connected to the interface 1003, for example.

The program used in the purchase assistance device 10 may be stored in a non-transitory computer-readable recording medium, such as compact disc read only memory (CD-ROM), digital versatile disc (DVD), USB flash drive, memory card, or HDD, to be distributed. This program can be installed in a specific computer or general-purpose computer to cause the computer to function as the purchase assistance device 10.

The program may also be stored in a storage device included in another server on the Internet and downloaded from the server into a computer.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Reference Signs List

- 1: Purchase assistance system
- 10: Purchase assistance device
- 20: Terminal
- 100: Controller
- 101: Question screen generator
- 102: Input information acquirer
- 103: Refrigerator information acquirer
- 104: Comparison screen generator
- 105: Screen information transmitter
- 106: Captured image information acquirer
- 110: Storage
- 120: Communicator
- 1000: Bus
- 1001: Processor
- 1002: Memory
- 1003: Interface
- 1004: Secondary storage unit
- D1: Question database
- D2: Refrigerator database
- NT: Network

## Claims

1. A purchase assistance device, comprising:
requirement information acquisition means for acquiring requirement information that indicates a requirement desired for a refrigerator by a user planning to purchase the refrigerator;
refrigerator information acquisition means for acquiring first refrigerator information about a first refrigerator currently used by the user and second refrigerator information about a second refrigerator that satisfies the requirement indicated by the requirement information; and
screen generation means for generating, based on the first refrigerator information and the second refrigerator information, a screen for visual comparison between the first refrigerator and the second refrigerator.

2. The purchase assistance device according to claim 1, wherein
the screen generation means further generates a question screen for presenting a question about a refrigerator to the user, and
the requirement information acquisition means acquires the requirement information based on an answer that the user inputs on the question screen.

3. The purchase assistance device according to claim 2, wherein the screen generation means generates a plurality of question screens for presenting questions in an order dedicated to refrigerators.

4. The purchase assistance device according to claim 3, wherein
the questions include questions of large categories and questions of small categories, and
the screen generation means generates question screens concerning the questions of large categories and then generates question screens concerning the questions of small categories.

5. The purchase assistance device according to claim 4, wherein the questions of large categories include a question that contributes to smoother specification of the refrigerator than the questions of small categories.

6. The purchase assistance device according to claim 4 or 5, wherein the questions of large categories include a question about a number of doors of the refrigerator and a question about a capacity of the refrigerator.

7. The purchase assistance device according to any one of claims 4 to 6, wherein the questions of small categories include at least a question about functions of a refrigerating compartment of the refrigerator and a question about whether the refrigerator includes an ice compartment.

8. The purchase assistance device according to claim 2, wherein the question about the refrigerator includes a question about a number of doors of the refrigerator and a question about a capacity of the refrigerator.

9. The purchase assistance device according to any one of claims 1 to 8, further comprising image information acquisition means for acquiring captured image information indicating a captured image obtained by imaging an indoor space where the first refrigerator is installed, wherein
the screen generation means generates, based on the first refrigerator information and the second refrigerator information, an augmented reality image by superimposing an image of the second refrigerator on the captured image, and thereby generates a screen for visual comparison between the first refrigerator and the second refrigerator.

10. A purchase assistance method, comprising:
acquiring first refrigerator information about a first refrigerator currently used by a user planning to purchase a refrigerator, and second refrigerator information about a second refrigerator that satisfies a requirement desired for a refrigerator by the user; and
displaying a screen for visual comparison between the first refrigerator and the second refrigerator, based on the first refrigerator information and the second refrigerator information.

11. A program for causing a computer to function as:
requirement information acquisition means for acquiring requirement information that indicates a requirement desired for a refrigerator by a user planning to purchase the refrigerator;
refrigerator information acquisition means for acquiring first refrigerator information about a first refrigerator currently used by the user and second refrigerator information about a second refrigerator that satisfies the requirement indicated by the requirement information; and
screen generation means for generating, based on the first refrigerator information and the second refrigerator information, a screen for visual comparison between the first refrigerator and the second refrigerator.
